# FASCICULE DE BREVET EUROPEEN

(11) **EP 1 453 276 B1**
(45) Date de publication et mention de la délivrance du brevet: **03.05.2017**
(21) Numéro de dépôt: 04290332.8
(22) Date de dépôt: 09.02.2004
(51) Int. Cl.: H04M 7/00, H04L 29/06

(54) **Dispositif de gestion de communications par sélection de terminaux et de médium de communication**
Kommunikationsverwaltungsgerät mit Auswahl von Netzwerkendgeräten und eines Kommunikationsmediums
Device for communications management with terminal and communication medium selection

(30) Priorité: 25.02.2003 FR 0302264
(43) Date de publication de la demande: 01.09.2004
(73) Titulaire: ALCATEL LUCENT, 92100 Boulogne-Billancourt (FR)
(72) Inventeur: Pinault, Francis, 92270 Bois-Colombes (FR)
(74) Mandataire: Berthier, Karine

(56) Documents cités:
- US-A1- 2003 021 259
- MMUSIC WG: HANDLEY ET AL: "draft-ietf-sip-rfc2543bis-00.ps - SIP: Session Initiation Protocol", INTERNET ENGINEERING TASK FORCE, XX, XX, 5 juin 2000 (2000-06-05), pages 1-129, XP002164649,
- J-F REY ET AL: "SIP Technology in the Enterprise: SIP technology will be the next step in IP telephony, bringing new Internet telephony services to enterprise users", ALCATEL TELECOMMUNICATIONS REVIEW, ALCATEL, PARIS CEDEX, FR, octobre 2002 (2002-10), XP007005899, ISSN: 1267-7167
- SENS T: "Next Generation of Unified Communication for Enterprise: New communication applications that are accessible on any device are helping businesses to be more competitive in the age of the borderless enterprise", ALCATEL TELECOMMUNICATIONS REVIEW, ALCATEL, PARIS CEDEX, FR, octobre 2002 (2002-10), XP007005900, ISSN: 1267-7167

## Description

L'invention concerne le domaine des communications entre terminaux de communication, et plus particulièrement l'établissement, sur requête, de communications entre terminaux de communication.

De nombreuses personnes disposent aujourd'hui de terminaux de communication de types différents, offrant des services de types différents (comme par exemple la téléphonie fixe ou mobile, la téléphonie par Internet, la transmission de données de texte, de voix, d'images fixes ou animées, ou de données multimédia). C'est notamment le cas au sein de nombreuses entreprises disposant d'un réseau privé.

En raison de cette situation, lorsqu'un appelant souhaite transmettre à un appelé, en direct, des données d'un certain type, trois conditions doivent être satisfaites : l'appelé doit être accessible, l'appelant et l'appelé doivent disposer simultanément de terminaux disponibles et capables d'échanger des données de même(s) type(s), et les ressources de(s) réseau(x) de communications, au sein duquel (desquels) doi(ven)t s'établir la communication, doivent supporter le(s)dit(s) type(s) de données à échanger et doivent être disponibles.

Or, lorsque l'appelant décide d'initier une transmission il ne sait généralement pas si ces trois conditions sont simultanément satisfaites. Il doit donc saisir le terminal qu'il estime adapté à cette transmission, puis tenter d'établir la communication. En cas de tentative infructueuse, ce qui est relativement fréquent, l'appelant doit manipuler des répertoires et/ou établir une ou plusieurs communications pour déterminer l'adresse de communication du terminal grâce auquel il est susceptible de joindre l'appelé. L'appelant peut être également contraint d'utiliser un autre type de terminal. En outre, une fois la liaison établie entre un terminal d'appelant et un terminal d'appelé, il n'est pas garanti que l'appelant puisse transmettre ses données à l'appelé, notamment lorsque leurs terminaux respectifs offrent des services de types différents. Enfin, même si les terminaux permettent de supporter un type d'échange, il n'est pas certain que le réseau emprunté, bien que supportant l'établissement de la communication, supporte le transport du médium (par exemple, deux téléphones mobiles peuvent supporter des échanges de type MMS, mais ils ne peuvent pas s'échanger des photographies numérisées du fait que leur réseau, de type GPRS/GSM, ne dispose pas de serveur MMS). En d'autres termes, non seulement l'appelant doit effectuer manuellement chaque opération, mais en plus il n'a aucun moyen de savoir si sa tentative à une réelle chance d'aboutir.

L'invention a donc pour but de remédier à tout ou partie des inconvénients précités.

Elle propose à cet effet un dispositif selon la revendication indépendante 1 dédié à la gestion de communications entre des terminaux de communication, à la requête d'utilisateurs appelants.

Ce dispositif ce caractérise par le fait qu'il comprend, d'une part, une mémoire capable de stocker des identifiants d'utilisateurs en correspondance de listes d'au moins un identifiant de terminal de communication, et d'autre part, des moyens de traitement chargés, lorsqu'ils reçoivent une demande d'appel d'un utilisateur appelé par un utilisateur appelant, d'accéder à la mémoire pour en extraire les listes d'identifiants de terminaux qui sont associées aux identifiants des utilisateurs appelant et appelé, puis de déterminer au sein de ces listes extraites un terminal d'appelant et un terminal d'appelé susceptibles d'établir entre eux une communication satisfaisant à la demande d'appel de l'utilisateur appelant, en fonction d'au moins un critère de disponibilité.

De la sorte, le dispositif de gestion détermine si une liaison peut être établie entre un utilisateur appelant et un utilisateur appelé, avant qu'une tentative de communication ne soit effectuée, et sans que l'utilisateur appelant n'ait à intervenir

Selon une autre caractéristique de l'invention, les moyens de traitement sont préférentiellement chargés de déterminer non seulement les terminaux d'appelant et d'appelé, mais également le médium de communication le mieux adapté à ces terminaux d'appelant et d'appelé. On entend ici par « médium de communication le mieux adapté », le médium permettant la transmission du plus grand nombre de types différents de données.

Le dispositif de gestion selon l'invention peut se décliner de nombreuses façons, éventuellement combinables entre elles, selon l'agencement de sa mémoire et de ses moyens de traitement, et notamment :
- les moyens de traitement peuvent être chargés d'effectuer leur détermination en fonction de l'état de disponibilité des terminaux d'appelant et d'appelé. Dans ce cas, la mémoire est préférentiellement capable de stocker les identifiants de terminal de communication en correspondance de l'état de disponibilité des terminaux ;
- les moyens de traitement peuvent être chargés d'effectuer leur détermination en fonction de l'état de disponibilité des ressources du réseau de communications au sein duquel doit s'effectuer (au moins en partie) la communication satisfaisant à la demande de l'utilisateur appelant ;
- les moyens de traitement peuvent être chargés d'effectuer leur détermination en fonction d'au moins un autre critère, dit auxiliaire. Parmi ces critères on peut notamment citer :
   - l'accessibilité des utilisateurs appelant et/ou appelé. Les moyens de traitement sont alors chargés d'effectuer leur détermination en fonction de l'état d'accessibilité des utilisateurs. Dans ce cas, la mémoire est préférentiellement capable de stocker les identifiants d'utilisateur en correspondance de l'état d'accessibilité des utilisateurs ;
   - la préférence d'utilisation de terminal par un utilisateur. Les moyens de traitement sont alors chargés d'effectuer leur détermination en fonction des préférences d'utilisation de terminal des utilisateurs appelant et/ou appelé. Dans ce cas, la mémoire est préférentiellement capable de stocker les identifiants d'utilisateur en correspondance d'une préférence d'utilisation de terminal ;
   - la politique d'utilisation de terminaux et/ou de médium par une entreprise. Dans ce cas, les moyens de traitement sont capables d'effectuer leur détermination en fonction de la politique d'utilisation de l'entreprise à laquelle l'utilisateur appelant et/ou l'utilisateur appelé sont rattachés ;
   - le niveau de qualité de communication. Les moyens de traitement sont alors chargés d'effectuer leur détermination en fonction d'informations de niveau de qualité associées aux utilisateurs appelant et/ou appelé. Dans ce cas, la mémoire est préférentiellement capable de stocker les identifiants d'utilisateur en correspondance d'une information représentative d'un niveau de qualité de communication ;
   - le niveau hiérarchique de l'utilisateur appelant et/ou de l'utilisateur appelé au sein d'une entreprise. Les moyens de traitement sont alors chargés d'effectuer leur détermination en fonction d'informations de niveau hiérarchique des utilisateurs appelant et/ou appelé. Dans ce cas, la mémoire est préférentiellement capable de stocker les identifiants d'utilisateur en correspondance d'une information représentative d'un niveau hiérarchique au sein de l'entreprise ;
   - l'information de localisation géographique de l'utilisateur appelant et/ou de l'utilisateur appelé. Les moyens de traitement sont alors chargés d'effectuer leur détermination en fonction des localisations géographiques des utilisateurs appelant et/ou appelé et de la topologie d'au moins un réseau de communications dans lequel doit s'effectuer la communication. Dans ce cas, la mémoire est capable de stocker les identifiants d'utilisateur en correspondance d'une information de localisation géographique ;
   - la disponibilité des moyens de connexion des réseaux de communications. Les moyens de traitement sont alors chargés d'effectuer leur détermination en fonction des informations de disponibilité des moyens de connexion d'au moins un réseau de communications dans lequel doit s'effectuer la communication. Le critère auxiliaire de disponibilité des moyens de connexion peut être également accompagné d'un critère auxiliaire de qualité des moyens de connexion disponibles et/ou de prix d'utilisation desdits moyens de connexion.
- les moyens de traitement peuvent être chargés de transmettre à l'utilisateur appelant des données représentatives du médium déterminé pour la communication ;
- les moyens de traitement peuvent être chargés, après avoir déterminé les terminaux d'appelant et d'appelé, d'ordonner l'établissement de la communication entre les terminaux d'appelant et d'appelé. Cet ordre peut être transmis de façon automatique ou bien consécutivement à la réception d'une autorisation issue de l'utilisateur appelant et/ou de l'utilisateur appelé ;
- les moyens de traitement peuvent être également agencés de manière à déterminer un autre terminal d'appelant et/ou un autre terminal d'appelé, susceptibles d'établir entre eux une autre communication satisfaisant à la demande initiale de l'utilisateur appelant, et/ou un autre médium de communication, en cas d'impossibilité d'établissement de la communication.

L'invention porte également sur un serveur d'appels (ou « call server »), selon la revendication indépendante 25 pour un réseau de communications, comprenant au moins un dispositif de gestion du type de celui présenté ci-avant.

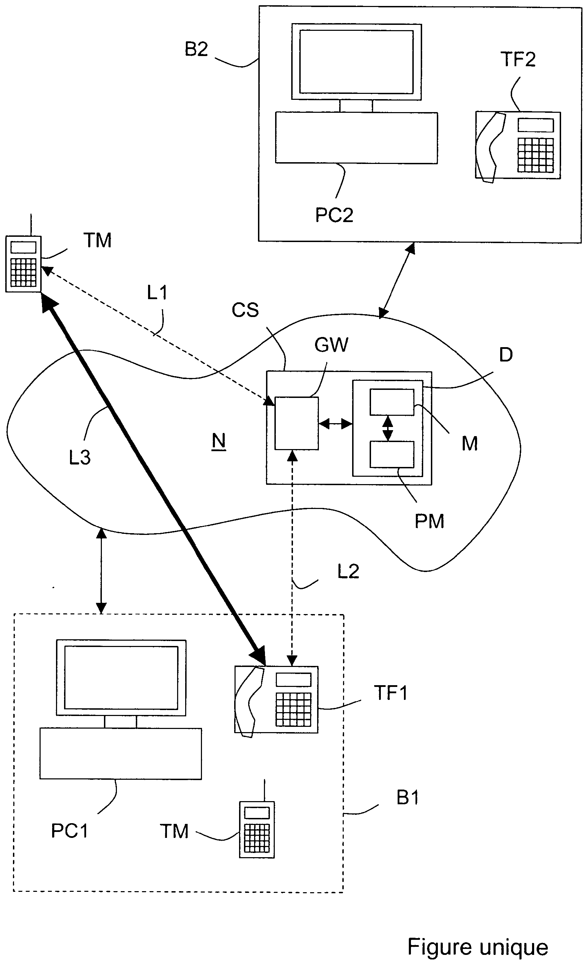

D'autres caractéristiques et avantages de l'invention apparaîtront à l'examen de la description détaillée ci-après, et du dessin annexé, sur lequel l'unique figure illustre de façon schématique un réseau de communications équipé d'un exemple de réalisation d'un dispositif de gestion selon l'invention. Le dessin annexé pourra non seulement servir à compléter l'invention, mais aussi contribuer à sa définition, le cas échéant.

L'invention porte sur la gestion d'appels entre des utilisateurs appelants et des utilisateurs appelés, à la requête d'utilisateurs appelants, en vue d'une transmission de données en direct.

On entend ici par « appel », l'établissement d'une communication, via au moins un réseau de communications, entre un terminal de communication d'un utilisateur appelant et un terminal de communication d'un utilisateur appelé, permettant auxdits utilisateurs appelant et appelé d'échanger en direct des données d'un ou plusieurs types différents (vidéo, audio ou données de messagerie (fichiers de texte, « e-mail », et analogues)).

Sur l'unique figure se trouve représenté schématiquement un réseau privé d'entreprise N, par exemple à protocole IP. Dans cet exemple, chaque utilisateur Ui (ici i = 1 et 2) est rattaché à l'entreprise et dispose d'un bureau Bi équipé de connecteurs permettant le raccordement au réseau privé N de terminaux de communication, par voie filaire ou par voie d'ondes (par exemple de type infrarouge ou Bluetooth).

Par ailleurs, dans cet exemple, chaque utilisateur Ui dispose d'un téléphone mobile TMi, d'un téléphone/télécopieur fixe TFi et d'un ordinateur individuel PCi communicant. Chaque téléphone/télécopieur TFi est raccordé à un réseau de téléphonie commuté public traditionnel (ou PSTN pour « Public Switched Telephone Network »), via le réseau privé N. Chaque téléphone mobile TMi est raccordé à un réseau de téléphonie mobile (non représenté), par exemple de type GSM/GPRS (ou UMTS), auquel est raccordé le réseau privé N. Enfin, chaque ordinateur PCi est raccordé au réseau privé N.

Bien entendu, l'invention n'est pas limitée aux seuls réseaux privés de communication. Elle concerne tout type de réseau de communication. Par ailleurs, l'invention n'est pas limitée à la gestion d'appels entre des utilisateurs rattachés à une même entreprise. Elle concerne tout type d'utilisateur, rattaché ou non à une entreprise. Enfin, l'invention n'est pas limitée aux seuls utilisateurs équipés de trois terminaux de communication de type différents. Elle concerne tout utilisateur équipé d'au moins un terminal de communication (mais il est clair que l'invention est d'autant plus utile que le nombre de terminaux associés à un même utilisateur est élevé).

L'invention propose un dispositif de gestion D, par exemple implanté dans un serveur d'appels (ou « call server ») CS du réseau privé N, préférentiellement équipé d'une passerelle d'accès (ou « gateway ») GW chargée de négocier des connexions selon un protocole de communication tel que, par exemple, SIP (pour « Session Inition Protocol »). Le document draft-ietf-sip-rfc2543bis-00.ps, XP002164649 décrit le protocole de communication SIP et les moyens serveurs pour établir des communications. Le dispositif de gestion D comprend une mémoire M dans laquelle se trouve stockée une table de correspondance entre au moins des identifiants d'utilisateurs et des listes d'au moins un identifiant de terminal de communication. Un identifiant d'utilisateur est constitué de données représentatives, par exemple, d'un nom ou d'un code alphanumérique. Par ailleurs, la liste associée à un utilisateur comprend les identifiants de communication de chacun de ses terminaux de communication. Un identifiant de terminal est par exemple un numéro de téléphone ou une adresse IP.

Le dispositif de gestion D comprend également un module de traitement PM chargé, chaque fois qu'il reçoit une demande d'appel d'un utilisateur Uj (appelé) par un utilisateur Ui (appelant), d'accéder à la mémoire M pour en extraire les deux listes d'identifiants de terminaux qui sont associées aux identifiants des utilisateurs appelant Ui et appelé Uj. Une fois ces deux listes extraites, le module de traitement PM tente de déterminer parmi celles-ci, en fonction d'au moins un critère de disponibilité, un terminal d'appelant et un terminal d'appelé susceptibles d'établir entre eux une communication pouvant satisfaire à la demande de l'utilisateur appelant Ui.

La demande d'appel peut être effectuée par l'utilisateur appelant Ui par n'importe quel moyen, comme par exemple par commande vocale ou sélection d'un menu sur l'un de ses terminaux répertoriés ou sur une borne interactive implantée dans son entreprise, puis par fourniture du nom de l'utilisateur appelé Uj (ou de son identifiant) par la voix, ou par saisie, ou encore par sélection dans un répertoire. Dans les cas précités, le terminal de l'utilisateur ou la borne interactive connaît l'identifiant de communication du serveur d'appels CS dans lequel est implanté le dispositif D, de sorte qu'il peut établir automatiquement la liaison avec ce dernier. Mais, on peut également envisager que l'utilisateur appelant Ui compose lui-même l'identifiant de communication du serveur d'appels CS dans lequel est implanté le dispositif D, par exemple avec l'un de ses terminaux ou avec n'importe quel autre terminal de communication, puis communique audit dispositif D son propre identifiant d'utilisateur et l'identifiant de l'utilisateur à appeler, soit par saisie, soit par commande vocale.

Plusieurs critères de disponibilité peuvent être utilisés, soit séparément, soit en combinaison. Parmi ces critères de disponibilité, on peut notamment citer la disponibilité des terminaux ou la disponibilité des ressources d'au moins l'un des réseaux de communications au sein desquels doit s'effectuer la communication satisfaisant à la demande de l'utilisateur appelant Ui, ou encore la disponibilité de ressources mémoire du terminal de l'appelant et/ou du terminal de l'appelé. D'autres critères de disponibilité peuvent être également envisagés, comme par exemple le temps de calcul nécessaire (CPU) ou l'autorisation d'échanger un type de données conformément à une politique de sécurité mise en oeuvre par un pare-feu (ou « firewall »).

Lorsque le module de traitement PM effectue sa détermination en fonction (notamment) de l'état de disponibilité des terminaux de communication contenus dans les listes associées aux utilisateurs appelant Ui et appelé Uj, il est préférable que lesdits états de disponibilité soient stockés dans la mémoire M en correspondance des identifiants de terminal. Mais cela n'est pas une obligation. Le module de traitement PM peut en effet être agencé de manière à déterminer ces informations d'état au sein du réseau privé N.

Lorsque le module de traitement PM effectue sa détermination en fonction (notamment) de l'état de disponibilité des ressources des réseaux, il est préférable qu'il détermine ces informations d'état au sein des réseaux concernés. Mais cela n'est pas une obligation. On peut en effet envisager que la table de correspondance, stockée dans la mémoire M, contienne à chaque instant l'état de disponibilité des ressources des principaux réseaux de communications utilisés par les terminaux des utilisateurs dont les identifiants sont contenus dans ladite table.

Préférentiellement, le module de traitement PM détermine à la fois les terminaux d'appelant et d'appelé, mais également le médium de communication (ou le CODEC (COdeur/DECodeur) ou encore le « bearer ») qui est le mieux adapté à ces terminaux d'appelant et d'appelé, en privilégiant avantageusement, lorsque cela est possible, celui qui permet de transmettre le plus grand nombre de types différents de données.

Par exemple, une communication dédiée à l'échange de données peut être supportée par un réseau de téléphonie mobile de type GSM classique, présentant un « bearer data » à 9600 bauds, mais elle peut être également supportée par le même réseau GSM lorsqu'il présente un bearer GPRS à des vitesses supérieures.

On entend ici par « médium » un support de communication, ou un CODEC, ou encore un bearer, adapté à la transmission audio (ou voix) et/ou vidéo (ou images fixes ou animées) et/ou de données (textuelles ou de messagerie, par exemple). On entend également par « médium» le réseau de transport emprunté, comme par exemple TCP/IP ou UDP/IP sur Internet, GSM pour la voix et les données (data), GSM/GPRS en mode paquet TCP ou UDP, et TETRA.

Il est important de comprendre que l'objet de l'invention n'est pas de permettre la détermination des terminaux qui vont satisfaire à une demande de transmission de données d'un type choisi (par exemple vidéo), mais de permettre la détermination à un instant donné des terminaux d'appelant et d'appelé, ainsi que de préférence d'un médium de communication, qui vont permettre à un appelant de joindre en direct un appelé, indépendamment du type de données à transmettre. En d'autres termes le dispositif D selon l'invention est chargé de déterminer s'il est possible d'établir une liaison entre deux terminaux d'utilisateurs, et dans l'affirmative de déterminer le médium de communication qui permettra de transmettre le plus de types différents de données entre ces deux terminaux.

Le module de traitement PM peut être agencé de manière à effectuer sa détermination en fonction d'un ou plusieurs autres critères que le ou les critères de disponibilité précités. Parmi ces critères additionnels (ou auxiliaires), on peut notamment citer l'accessibilité des utilisateurs appelant et/ou appelé, la préférence d'utilisation de terminal par un utilisateur, la politique d'utilisation de terminaux et/ou de média par une entreprise, le niveau de qualité de communication, le niveau hiérarchique de l'utilisateur appelant et/ou de l'utilisateur appelé au sein d'une entreprise, l'information de localisation géographique de l'utilisateur appelant et/ou de l'utilisateur appelé, et la sécurité de la communication.

Lorsque le module de traitement PM tient compte de l'accessibilité des utilisateurs appelant et/ou appelé pour effectuer sa détermination, il est préférable que la table de correspondance contienne l'état d'accessibilité des utilisateurs dont les identifiants sont stockés dans la mémoire M. Mais cela n'est pas une obligation. Le module de traitement PM peut en effet être agencé de manière à déterminer ces informations d'état au sein du réseau privé N. On entend ici par « état d'accessibilité» la possibilité ou l'impossibilité de joindre un utilisateur (appelant ou appelé) à l'aide de l'un au moins de ses terminaux de communication. On peut en effet envisager qu'un utilisateur ne souhaite pas être appelé sur l'un de ses terminaux lorsqu'il se trouve en un lieu particulier. Par exemple, un utilisateur Ui ne veut pas être appelé sur son téléphone mobile TMi lorsqu'il se trouve dans une salle d'attente ou de spectacle, ou dans un moyen de locomotion. Dans ce cas, le réseau privé N met à la disposition de ses utilisateurs un service leur permettant de signaler le ou les terminaux avec lesquels ils veulent bien être appelés ou qu'ils veulent bien utiliser à un instant donné.

Lorsque le module de traitement PM tient compte de la préférence d'utilisation d'un terminal par un utilisateur pour effectuer sa détermination, il est préférable que la table de correspondance contienne les informations de préférence d'utilisation des utilisateurs dont les identifiants sont stockés dans la mémoire M. Mais cela n'est pas une obligation. Le module de traitement PM peut en effet être agencé de manière à déterminer ces informations d'état au sein du réseau privé N. On peut en effet envisager qu'un utilisateur préfère être appelé sur, ou appeler avec, l'un de ses terminaux. Dans ce cas, le réseau privé N met à la disposition de ses utilisateurs un service leur permettant de signaler le ou les terminaux avec lesquels ils préfèrent être appelés ou qu'ils préfèrent utiliser. Mais, cette information de préférence peut également résulter d'une analyse statistique de l'utilisation des terminaux de types différents par les différents utilisateurs du réseau privé N. Dans ce cas, cette information statistique est préférentiellement déterminée et fournie par le réseau privé N.

Lorsque le module de traitement PM tient compte de la politique d'utilisation de terminaux et/ou de média par une entreprise, il est préférable qu'il détermine les données d'information représentatives de la politique d'utilisation de l'entreprise dans le réseau privé N de cette entreprise. Mais cela n'est pas une obligation. On peut en effet envisager que la table de correspondance, stockée dans la mémoire M, contienne les données définissant la politique d'utilisation de l'entreprise. On entend ici par « politique d'utilisation d'entreprise » des règles définissant, par exemple, des niveaux de priorité d'utilisation des terminaux en fonction de leur type, et/ou des niveaux de priorité d'utilisation des média de communication en fonction de leur type. Cette politique d'utilisation peut éventuellement dépendre du lieu où se trouve un utilisateur appelant ou appelé. On peut en effet envisager qu'une entreprise privilégie la communication par téléphone mobile TMi lorsque l'utilisateur est à l'extérieur de ladite entreprise et/ou privilégie la communication par téléphone fixe TFi lorsque l'utilisateur est au sein de ladite entreprise.

Lorsque le module de traitement PM tient compte des niveaux de qualité associés aux utilisateurs appelant et/ou appelé, il est préférable que la table de correspondance contienne les données d'informations représentatives desdits niveaux de qualité associés aux utilisateurs dont les identifiants sont stockés dans la mémoire M. Mais cela n'est pas une obligation. Le module de traitement PM peut en effet être agencé de manière à déterminer ces informations de niveau de qualité au sein du réseau privé N. On peut en effet envisager que les utilisateurs rattachés à une entreprise bénéficient de niveaux de qualité différents selon la fonction qu'ils occupent.

Lorsque le module de traitement PM tient compte des niveaux hiérarchiques associés aux utilisateurs appelant et/ou appelé, il est préférable que la table de correspondance contienne les données d'informations représentatives desdits niveaux hiérarchiques associés aux utilisateurs dont les identifiants sont stockés dans la mémoire M. Mais cela n'est pas une obligation. Le module de traitement PM peut en effet être agencé de manière à déterminer ces informations de niveau hiérarchique au sein du réseau privé N. On peut en effet envisager que les utilisateurs rattachés à une entreprise bénéficient de niveaux de qualité différents et/ou d'accès à certains média de communication selon leur niveau hiérarchique au sein de l'entreprise.

Lorsque le module de traitement PM tient compte de la localisation géographique des utilisateurs appelant et/ou appelé, et de la topologie du réseau privé N (et/ou des autres réseaux de communications auxquels il est raccordé), il est préférable que la table de correspondance contienne les données d'informations représentatives desdites localisation géographiques des utilisateurs dont les identifiants sont stockés dans la mémoire M. Mais cela n'est pas une obligation. Le module de traitement PM peut en effet être agencé de manière à déterminer ces informations de localisation géographique au sein du réseau privé N et/ou des autres réseaux de communications. On peut en effet envisager, comme indiqué précédemment, que le médium autorisé par l'entreprise dépende de la localisation géographique de l'utilisateur appelant et/ou appelé par rapport au réseau privé N.

Lorsque le module de traitement PM tient compte de la sécurité de la communication, il est préférable qu'il détermine les données représentatives de la sécurité au sein du réseau privé N et/ou des autres réseaux concernés. Mais cela n'est pas une obligation. On peut en effet envisager que la table de correspondance, stockée dans la mémoire M, contienne les données définissant la sécurité. Par exemple, un terminal de communication peut être autorisé à établir des communications en intranet au sein de l'entreprise, mais il peut ne pas être autorisé à établir ce type de communication lorsqu'il est à l'extérieur de l'entreprise et qu'il est raccordé à Internet via son réseau de téléphonie mobile, du fait de la politique de sécurité de l'entreprise.

Le module de traitement PM peut être également agencé de manière à transmettre à l'utilisateur appelant Ui des données représentatives du médium déterminé pour la communication. Ainsi, l'utilisateur appelant Ui peut décider de renoncer à son appel si le médium proposé par le dispositif D n'est pas en mesure de supporter le type de données qu'il souhaite transmettre à l'utilisateur appelé Uj. Dans ce cas, l'utilisateur appelant Ui interrompt la communication établie avec le dispositif D, ou bien lui indique qu'il ne donne pas suite à sa demande d'appel. En revanche, lorsque le médium proposé par le dispositif D est en mesure de supporter le type de données que l'utilisateur appelant Ui souhaite transmettre à l'utilisateur appelé Uj, ledit utilisateur appelant Ui peut signaler au dispositif D qu'il accepte sa proposition et qu'il l'autorise à ordonner l'établissement de la communication qu'il vient de lui proposer. L'autorisation peut également provenir de l'utilisateur appelé Uj. Mais dans ce cas, cet utilisateur Uj doit recevoir du module de traitement PM les données représentatives du médium déterminé pour la communication. On peut également envisager une double autorisation provenant des deux utilisateurs Ui et Uj.

En variante, le module de traitement PM peut être agencé de manière à ordonner automatiquement l'établissement de chaque communication qu'il définit entre les terminaux d'appelant et d'appelé.

L'ordre d'établissement de la communication définie est adressé, ici, par le module de traitement PM à la passerelle d'accès GW du serveur d'appels CS. Il contient notamment les identifiants de communication des terminaux de l'appelant et de l'appelé qu'il a déterminé, et le médium de communication qu'il a choisi. L'envoi de cet ordre met fin à l'intervention du dispositif de gestion D.

Par exemple, dans l'exemple illustré sur l'unique figure, le module de traitement PM a décidé d'établir une communication audio entre le téléphone mobile TM1 de l'appelant U1 et le téléphone/télécopieur fixe TF2 de l'appelé, compte tenu de l'ensemble des critères utilisés.

A réception de l'ordre d'établissement de communication, la passerelle d'accès GW établit, par exemple, une première liaison L1 avec le téléphone mobile TM1 de l'appelant et une seconde liaison L2 avec le téléphone/télécopieur fixe TF2 de l'appelé, afin de négocier avec ces deux terminaux TM1 et TF2, selon le protocole SIP, l'établissement d'une communication sur une liaison L3. Bien entendu, d'autres méthodes d'établissement de communication peuvent être envisagées. Dans l'exemple illustré, l'utilisateur appelant Ui est à l'extérieur de son bureau Bi, de sorte que la liaison L3 s'effectue via le réseau de téléphonie mobile, le réseau de téléphonie commuté et le réseau privé N, mais sans passer par le serveur d'appels CS.

Une fois la négociation terminée, les deux terminaux TM1 et TF2 sont, par exemple, appelés sur la liaison L3 de manière à avertir leurs utilisateurs respectifs. Si la communication est effectivement établie cela met fin à l'intervention de la passerelle d'accès GW.

En revanche si la communication ne peut être établie, par exemple par ce que l'un des utilisateurs ne décroche pas, il est préférable que la passerelle d'accès GW le signale au dispositif de gestion D. Dans cette situation, deux modes de fonctionnement peuvent être envisagés.

Dans un premier mode de fonctionnement, le module de traitement PM adresse un message d'échec de communication au terminal (ou à la borne) avec lequel (laquelle) l'utilisateur appelant Ui a effectué sa demande d'appel.

Dans un second mode de fonctionnement, le module de traitement PM effectue une nouvelle détermination et communique un nouvel ordre à la passerelle d'accès GW. En variante, on peut envisager que le module de traitement PM soit agencé de manière à déterminer pour chaque demande d'appel une solution principale et une solution de repli, de sorte qu'en cas d'échec de la communication définie par la solution principale il transmette immédiatement à la passerelle GW les caractéristiques définissant la solution de repli. Une telle solution de repli peut être radicalement différente de la solution principale, tant pour ce qui concerne les terminaux de l'appelant et/ou de l'appelé que pour ce qui concerne le médium de communication.

Le dispositif de gestion D selon l'invention, et notamment son module de traitement PM, peuvent être réalisés sous la forme de circuits électroniques, de modules logiciels (ou informatiques), ou d'une combinaison de circuits et de logiciels.

L'invention ne se limite pas aux modes de réalisation de dispositif de gestion et de serveur d'appels décrits ci-avant, seulement à titre d'exemple, mais elle englobe toutes les variantes que pourra envisager l'homme de l'art dans le cadre des revendications ci-après.

Ainsi, on a décrit un exemple de réalisation dans lequel le dispositif de gestion selon l'invention était implanté dans un serveur d'appels d'un réseau de communications privé. Mais, ce dispositif de gestion pourrait être implanté en d'autres endroits d'un réseau de communications, comme par exemple dans un serveur d'un réseau de communications public géré par un opérateur (dans ce cas, les terminaux sont raccordés au serveur, directement ou indirectement (via un routeur), et l'opérateur gère le service d'établissement de communication, offert par l'invention, pour le compte de particuliers ou d'entreprises).

## Revendications

1. Dispositif (D) de gestion de communications entre des terminaux de communication (TMi,TFi,PCi), comprenant une mémoire (M) propre à stocker des identifiants d'utilisateurs en correspondance de listes d'au moins un identifiant de terminal de communication, et des moyens de traitement (PM) agencés, à réception d'une demande d'appel d'un utilisateur dit appelé (Uj) par un utilisateur dit appelant (Ui), pour accéder à ladite mémoire (M) pour extraire les listes d'identifiants de terminaux associées aux identifiants desdits utilisateurs appelant (Ui) et appelé (Uj), puis pour déterminer dans ces listes extraites un terminal d'appelant et un terminal d'appelé propres à établir entre eux une communication satisfaisant à ladite demande d'appel, en fonction d'au moins un critère de disponibilité.

2. Dispositif selon la revendication 1, **caractérisé en ce que** lesdits moyens de traitement (PM) sont agencés pour déterminer lesdits terminaux d'appelant et d'appelé ainsi qu'un médium de communication adapté auxdits terminaux d'appelant et d'appelé.

3. Dispositif selon la revendication 2, **caractérisé en ce que** ledit médium déterminé est celui capable d'assurer la transmission du plus grand nombre de types différents de données.

4. Dispositif selon la revendication 1, **caractérisé en ce que** lesdits moyens de traitement (PM) sont propres à effectuer leur détermination en fonction de l'état de disponibilité des terminaux d'appelant et d'appelé.

5. Dispositif selon la revendication 4, **caractérisé en ce que** ladite mémoire (M) est propre à stocker lesdits identifiants de terminal de communication (TMi,TFi,PCi) en correspondance de leur état de disponibilité.

6. Dispositif selon la revendication 1, **caractérisé en ce que**, la communication satisfaisant à ladite demande devant s'effectuer via au moins un réseau de communications (N) présentant un état de disponibilité de ressources, lesdits moyens de traitement (PM) sont propres à effectuer leur détermination en fonction de l'état de disponibilité des ressources dudit réseau de communications (N).

7. Dispositif selon la revendication 1, **caractérisé en ce que** lesdits moyens de traitement (PM) sont agencés pour effectuer leur détermination en fonction d'au moins un autre critère, dit auxiliaire.

8. Dispositif selon la revendication 7, **caractérisé en ce que** lesdits moyens de traitement (PM) sont propres à effectuer leur détermination en fonction d'états d'accessibilité des utilisateurs, ladite accessibilité constituant un critère auxiliaire.

9. Dispositif selon la revendication 8, **caractérisé en ce que** ladite mémoire (M) est propre à stocker lesdits identifiants d'utilisateur en correspondance de leur état d'accessibilité.

10. Dispositif selon la revendication 7, **caractérisé en ce que** lesdits moyens de traitement (PM) sont propres à effectuer leur détermination en fonction de préférences d'utilisation de terminal des utilisateurs appelant et/ou appelé, ladite préférence d'utilisation constituant un critère auxiliaire.

11. Dispositif selon la revendication 10, **caractérisé en ce que** ladite mémoire (M) est propre à stocker lesdits identifiants d'utilisateur en correspondance d'une préférence d'utilisation de terminal.

12. Dispositif selon la revendication 7, **caractérisé en ce que**, l'un au moins desdits utilisateurs étant rattaché à une entreprise ayant défini une politique d'utilisation de terminaux et/ou de média, lesdits moyens de traitement (PM) sont propres à effectuer leur détermination en fonction de ladite politique d'utilisation, ladite politique d'utilisation constituant un critère auxiliaire.

13. Dispositif selon la revendication 7, **caractérisé en ce que** lesdits moyens de traitement (PM) sont propres à effectuer leur détermination en fonction d'informations de niveau de qualité associées aux utilisateurs appelant et/ou appelé, ladite information de niveau de qualité constituant un critère auxiliaire.

14. Dispositif selon la revendication 13, **caractérisé en ce que** ladite mémoire (M) est propre à stocker lesdits identifiants d'utilisateur en correspondance d'une information représentative d'un niveau de qualité de communication.

15. Dispositif selon la revendication 7, **caractérisé en ce que** lesdits moyens de traitement (PM) sont propres à effectuer leur détermination en fonction d'informations de niveau hiérarchique des utilisateurs appelant et/ou appelé au sein d'une entreprise, ladite information de niveau hiérarchique constituant un critère auxiliaire.

16. Dispositif selon la revendication 15, **caractérisé en ce que** ladite mémoire (M) est propre à stocker lesdits identifiants d'utilisateur en correspondance d'une information représentative d'un niveau hiérarchique au sein de l'entreprise.

17. Dispositif la revendication 7, **caractérisé en ce que** lesdits moyens de traitement (PM) sont propres à effectuer leur détermination en fonction d'informations de localisation géographique des utilisateurs appelant et/ou appelé et de la topologie d'au moins un réseau de communications dans lequel doit s'effectuer ladite communication, ladite localisation géographique constituant un critère auxiliaire.

18. Dispositif selon la revendication 17, **caractérisé en ce que** ladite mémoire (M) est propre à stocker lesdits identifiants d'utilisateur en correspondance d'une information de localisation géographique.

19. Dispositif selon la revendication 7, **caractérisé en ce que** lesdits moyens de traitement (PM) sont propres à effectuer leur détermination en fonction d'informations de disponibilité de moyens de connexion d'au moins un réseau de communications dans lequel doit s'effectuer ladite communication, ladite disponibilité des moyens de connexion constituant un critère auxiliaire.

20. Dispositif selon la revendication 1, **caractérisé en ce que** lesdits moyens de traitement (PM) sont agencés pour transmettre audit utilisateur appelant (Ui) des données représentatives du médium déterminé pour ladite communication.

21. Dispositif selon la revendication 1, **caractérisé en ce que** lesdits moyens de traitement (PM) sont propres, après détermination desdits terminaux d'appelant et d'appelé, à ordonner l'établissement de la communication entre lesdits terminaux d'appelant et d'appelé.

22. Dispositif selon la revendication 21, **caractérisé en ce que** lesdits moyens de traitement (PM) sont agencés pour ordonner ledit établissement de façon automatique.

23. Dispositif selon la revendication 21, **caractérisé en ce que** lesdits moyens de traitement (PM) sont agencés pour ordonner ledit établissement en cas de réception d'une autorisation dudit utilisateur appelant (Ui) et/ou dudit utilisateur appelé (Uj).

24. Dispositif selon la revendication 21, **caractérisé en ce que** lesdits moyens de traitement (PM) sont propres à déterminer un autre terminal d'appelant et/ou un autre terminal d'appelé, propres à établir entre eux une autre communication satisfaisant à ladite demande, et/ou un autre médium de communication, en cas d'impossibilité d'établissement de ladite communication.

25. Serveur d'appels (CS) pour un réseau de communications (N), **caractérisé en ce qu'**il comprend au moins un dispositif de gestion (D) selon l'une des revendications précédentes.

## Patentansprüche

1. Vorrichtung (Dispositif, D) zur Verwaltung von Kommunikationen zwischen Kommunikationsendgeräten (TMi, TFi, PCi), einen eigenen Speicher (Memoire, M) zum Speichern von Benutzerkennungen gemäß Listen mit mindestens einer Kommunikationsendgerätekennung und Mittel zur Verarbeitung (Processing Means, PM) umfassend, dafür ausgelegt, um auf den Empfang einer Anfrage zum Anruf eines angerufenen Benutzers (Uj) durch einen anrufenden Benutzer (Ui) hin auf besagten Speicher (M) zuzugreifen, um die Listen der Endgerätekennungen abzurufen, die mit besagten anrufenden (Ui) und angerufenen Benutzern (Uj) assoziiert sind, und weiterhin ausgelegt dafür, um in besagten extrahierten Listen ein Endgerät eines anrufenden Benutzers und ein Endgerät eines angerufenen Benutzers zu bestimmen, um zwischen ihnen in Funktion mindestens eines Verfügbarkeitskriteriums eine Kommunikation herzustellen, die besagte Anrufanfrage bedient.

2. Vorrichtung nach Anspruch 1, **dadurch gekennzeichnet, dass** besagte Verarbeitungsmittel (PM) eingerichtet sind für das Bestimmen besagter Endgeräte anrufender Benutzer und angerufener Benutzer sowie eines Kommunikationsmediums, das für besagte Endgeräte des anrufenden und des angerufenen Benutzers ausgelegt ist.

3. Vorrichtung nach Anspruch 2, **dadurch gekennzeichnet, dass** besagtes bestimmtes Medium dasjenige Medium ist, das in der Lage ist, zu gewährleisten, dass die größtmögliche Anzahl verschiedener Typen von Daten übermittelt wird.

4. Verfahren nach Anspruch 1, **dadurch gekennzeichnet, dass** besagte Verarbeitungsmittel (PM) dafür ausgelegt sind, um ihre Bestimmung in Funktion des Verfügbarkeitszustands der Endgeräte des anrufenden und des angerufenen Benutzers vorzunehmen.

5. Vorrichtung nach Anspruch 4, **dadurch gekennzeichnet, dass** besagter Speicher (M) ausgelegt ist für das Speichern besagter Kennungen besagter Kommunikationsendgeräte (TMi, TFi, PCi) entsprechend ihrem Verfügbarkeitszustand.

6. Vorrichtung nach Anspruch 1, **dadurch gekennzeichnet, dass** die Kommunikation, welche besagte Anfrage bedient, über mindestens ein Kommunikationsnetzwerk (N) herzustellen ist, das in einem Betriebszustand der Verfügbarkeit von Ressourcen ist, wobei besagte Verarbeitungsmittel (PM) dafür ausgelegt sind, um ihre Bestimmung in Funktion des Verfügbarkeitszustands der Ressourcen besagten Kommunikationsnetzwerks (N) vorzunehmen.

7. Verfahren nach Anspruch 1, **dadurch gekennzeichnet, dass** besagte Verarbeitungsmittel (PM) dafür eingerichtet sind, um ihre Bestimmung in Funktion mindestens eines weiteren Kriteriums vorzunehmen, das ein Hilfskriterium ist.

8. Verfahren nach Anspruch 7, **dadurch gekennzeichnet, dass** besagte Verarbeitungsmittel (PM) dafür ausgelegt sind, um ihre Bestimmung in Funktion der Erreichbarkeitszustände der Benutzer vorzunehmen, wobei besagte Erreichbarkeit ein Hilfskriterium ist.

9. Vorrichtung nach Anspruch 8, **dadurch gekennzeichnet, dass** besagter Speicher (M) ausgelegt ist für das Speichern besagter Kennungen besagter Benutzer entsprechend ihres Erreichbarkeitszustands.

10. Verfahren nach Anspruch 7, **dadurch gekennzeichnet, dass** besagte Verarbeitungsmittel (PM) dafür ausgelegt sind, um ihre Bestimmung in Funktion von Benutzungspräferenzen der Endgeräte der anrufenden und/oder angerufenen Benutzer vorzunehmen, wobei besagte Benutzungspräferenz ein Hilfskriterium ist.

11. Vorrichtung nach Anspruch 10, **dadurch gekennzeichnet, dass** besagter Speicher (M) ausgelegt ist für das Speichern besagter Benutzerkennungen gemäß einer Benutzungspräferenz des Endgeräts.

12. Vorrichtung nach Anspruch 1, **dadurch gekennzeichnet, dass** mindestens einer der besagten Benutzer mit einem Unternehmen in Verbindung steht, welches eine Benutzungspolitik für Endgeräte und/oder Medien festgelegt hat, wobei besagte Verarbeitungsmittel (PM) ausgelegt sind für das Ausführen ihrer Bestimmung in Funktion besagter Benutzungspolitik, die ein Hilfskriterium darstellt.

13. Verfahren nach Anspruch 7, **dadurch gekennzeichnet, dass** besagte Verarbeitungsmittel (PM) dafür ausgelegt sind, um ihre Bestimmung in Funktion von Qualitätsstufeninformationen vorzunehmen, die mit den anrufenden und/oder angerufenen Benutzern assoziiert sind, wobei besagte Qualitätsstufeninformationen ein Hilfskriterium sind.

14. Vorrichtung nach Anspruch 13, **dadurch gekennzeichnet, dass** besagter Speicher (M) ausgelegt ist für das Speichern besagter Benutzerkennungen gemäß einer Information hinsichtlich einer Kommunikationsqualitätsstufe.

15. Verfahren nach Anspruch 7, **dadurch gekennzeichnet, dass** besagte Verarbeitungsmittel (PM) dafür ausgelegt sind, um ihre Bestimmung in Funktion von Qualitätsstufeninformationen vorzunehmen, die mit den anrufenden und/oder angerufenen Benutzern assoziiert sind, wobei besagte Qualitätsstufeninformationen ein Hilfskriterium sind.

16. Vorrichtung nach Anspruch 15, **dadurch gekennzeichnet, dass** besagter Speicher (M) ausgelegt ist für das Speichern besagter Benutzerkennungen gemäß einer Information hinsichtlich einer hierarchischen Stufe innerhalb des Unternehmens.

17. Verfahren nach Anspruch 7, **dadurch gekennzeichnet, dass** besagte Verarbeitungsmittel (PM) dafür ausgelegt sind, um ihre Bestimmung in Funktion von Informationen zur geografischen Lokalisierung der anrufenden und/oder angerufenen Benutzer und zur Topologie mindestens eines Kommunikationsnetzwerks vorzunehmen, über das besagte Kommunikation zu erfolgen hat, wobei besagte geografische Lokalisierungsinformation ein Hilfskriterium ist.

18. Vorrichtung nach Anspruch 17, **dadurch gekennzeichnet, dass** besagter Speicher (M) ausgelegt ist für das Speichern besagter Benutzerkennungen gemäß einer geografischen Lokalisierungsinformation.

19. Verfahren nach Anspruch 7, **dadurch gekennzeichnet, dass** besagte Verarbeitungsmittel (PM) dafür ausgelegt sind, um ihre Bestimmung in Funktion von Informationen zur Verfügbarkeit von Mitteln für die Verbindung zu mindestens einem Kommunikationsnetzwerk vorzunehmen, über das besagte Kommunikation zu erfolgen hat, wobei besagte Verfügbarkeit von Verbindungsmitteln ein Hilfskriterium ist.

20. Vorrichtung nach Anspruch 1, **dadurch gekennzeichnet, dass** besagte Verarbeitungsmittel (PM) eingerichtet sind, um an besagten anrufenden Benutzer (Ui) Daten zu übermitteln, die repräsentativ sind für das für Besagte Kommunikation bestimmte Medium.

21. Vorrichtung nach Anspruch 1, **dadurch gekennzeichnet, dass** besagte Verarbeitungsmittel (PM) dafür ausgelegt sind, um nach dem Bestimmen besagter Endgeräte anrufender Benutzer und angerufener Benutzer das Herstellen der Kommunikation zwischen besagten Endgeräten des anrufenden und des angerufenen Benutzers anzuordnen.

22. Vorrichtung nach Anspruch 21, **dadurch gekennzeichnet, dass** die besagten Verarbeitungsmittel (PM) dafür eingerichtet sind, um besagtes Herstellen automatisch auszuführen.

23. Vorrichtung nach Anspruch, **dadurch gekennzeichnet, dass** besagte Verarbeitungsmittel (PM) dafür eingerichtet sind, um besagtes Herstellen im Fall des Empfangs einer Autorisierung besagten anrufenden Benutzers (Ui) und/oder besagten angerufenen Benutzers (Uj) anzuordnen.

24. Vorrichtung nach Anspruch 21, **dadurch gekennzeichnet, dass** besagte Verarbeitungsmittel (PM) dafür ausgelegt sind, um ein weiteres anrufendes Endgerät und/oder ein weiteres angerufenes Endgerät zu bestimmen, das dafür ausgelegt ist, um zwischen ihnen eine weitere Kommunikation herzustellen, die besagte Anfrage bedient, und/oder ein weiteres Kommunikationsmedium, falls das Herstellen besagter Kommunikation unmöglich ist.

25. Anrufserver (Call Server, CS) für ein Kommunikationsnetzwerk (N), **dadurch gekennzeichnet, dass** er mindestens eine Verwaltungsvorrichtung (D) nach einem der vorgenannten Ansprüche umfasst.

## Claims

1. A device (D) for managing communications between communication terminals (TMi, TFi, PCi), comprising a memory (M) capable of storing user identifiers as matches for lists of at least one communication terminal identifier, and processing means (PM) arranged, upon receipt of a request to call a user known as 'called' (Uj) by a calling user (Ui), to access said memory (M) to extract lists of terminal identifiers associated with the identifiers of said calling (Ui) and called (Uj) users, then to determine within those extracted lists a calling terminal and a called terminal able to establish between themselves a communication satisfying said call request, based on at least one availability criterion.

2. A device according to claim 1, **characterized in that** said processing means (PM) are arranged to determine said calling and called terminals as well as a communication medium adapted to said calling and called terminals.

3. A device according to claim 2, **characterized in that** said determined medium is the one capable of transmitting the largest number of different types of data.

4. A device according to claim 1, **characterized in that** said processing means (PM) are able to make their determination based on the availability status of the calling and called terminals.

5. A device according to claim 4, **characterized in that** said memory (M) is able to store said communication terminal (TMi, TFi, PCi) identifiers as matches for their availability statuses.

6. A device according to claim 1, **characterized in that**, the communication satisfying said call request needing to be performed via at least one communications network (N) having a resource availability status, said processing means (PM) are able to make their determination based on the availability status of the resources of the communications network (N).

7. A device according to claim 1, **characterized in that** said processing means (PM) are arranged to make their determination based on at least one other criterion, called an auxiliary one.

8. A device according to claim 7, **characterized in that** said processing means (PM) are able to make their determination based on accessibility statuses of users, said accessibility forming an auxiliary criterion.

9. A device according to claim 8, **characterized in that** said memory (M) is able to store said user identifiers as matches for their accessibility statuses.

10. A device according to claim 7, **characterized in that** said processing means (PM) are able to make their determination based on terminal usage preferences of calling and/or called users, said usage preference forming an auxiliary criterion.

11. A device according to claim 10, **characterized in that** said memory (M) is able to store said user identifiers as matches for a terminal usage preference.

12. A device according to claim 7, **characterized in that**, at least one of said users being assigned to a company that has defined a terminal and/or media usage policy, said processing means (PM) are able to make their determination based on said usage policy, said usage policy forming an auxiliary criterion.

13. A device according to claim 7, **characterized in that** said processing means (PM) are able to make their determination based on quality level information associated with calling and/or called users, said quality level information forming an auxiliary criterion.

14. A device according to claim 13, **characterized in that** said memory (M) is able to store said user identifiers as matches for information representative of a communication quality level.

15. A device according to claim 7, **characterized in that** said processing means (PM) are able to make their determination based on hierarchical level information of calling and/or called users within a company, said hierarchical level information forming an auxiliary criterion.

16. A device according to claim 15, **characterized in that** said memory (M) is able to store said user identifiers as matches for information representative of a hierarchical level within the company.

17. A device according to claim 7, **characterized in that** said processing means (PM) are able to make their determination based on geographic location information of calling and/or called users and on the topology of at least one communications network in which said communication must take place, said geographic location forming an auxiliary criterion.

18. A device according to claim 17, **characterized in that** said memory (M) is able to store said user identifiers as matches for geographic location information.

19. A device according to claim 7, **characterized in that** said processing means (PM) are able to make their determination based on availability information of connection means of at least one communications network in which said communication must take place, said availability of the connection means forming an auxiliary criterion.

20. A device according to claim 1, **characterized in that** said processing means (PM) are arranged to transmit to said calling user (Ui) data representative of the medium determined for said communication.

21. A device according to claim 1, **characterized in that** said processing means (PM) are able, after determining said calling and called terminals, to order the establishing of the communication between said calling and called terminals.

22. A device according to claim 21, **characterized in that** said processing means (PM) are arranged to order said establishing automatically.

23. A device according to claim 21, **characterized in that** said processing means (PM) are arranged to order said establishing in the event that authorization is received from said calling user (Ui) and/or said called user (Uj).

24. A device according to claim 21, **characterized in that** said processing means (PM) are able to determine another calling terminal and/or another called terminal able to establish between themselves another communication satisfying said request, and/or another communication medium, in the event it is impossible to establish said communication.

25. A call server (CS) for a communications network (N), **characterized in that** it comprises at least one management device (D) according to one of the preceding claims.
